# EUROPÄISCHE PATENTANMELDUNG

(11) **EP 1 515 521 A2**
(43) Veröffentlichungstag der Anmeldung: **16.03.2005**
(21) Anmeldenummer: 04021700.2
(22) Anmeldetag: 13.09.2004
(51) Int. Cl.: H04L 29/08

(54) **Verfahren und Vorrichtung zum automatischen Verarbeiten textbasierter Nachrichten zur Abfrage von Internet-basierten Applikationen**

(30) Priorität: 12.09.2003 DE 10342314
(71) Anmelder: Druschel, Axel, 61381 Friedrichsdorf (DE)
(72) Erfinder: Druschel, Axel, 61381 Friedrichsdorf (DE)
(74) Vertreter: Betten & Resch

(57) **Zusammenfassung**

Es wird ein Verfahren zum automatischen Verarbeiten textbasierter Nachrichten zur Abfrage von Internet-basierten Applikation bereitgestellt. Das Verfahren umfaßt die Schritte: Empfangen einer ersten textbasierten Nachricht von einem Nutzer; Extrahieren zumindest eines Schlüsselwortes aus der ersten textbasierten Nachricht; Generieren einer ersten Abfrage entsprechend dem Schlüsselwort; und Senden einer ersten Abfrage an eine dem Schlüsselwort zugeordnete Applikation.

## Beschreibung

Die vorliegende Erfindung betrifft ein Verfahren und eine Vorrichtung zum automatischen Verarbeiten textbasierter Nachrichten zur Abfrage von Internet-basierten Applikationen, und insbesondere ein Verfahren und eine Vorrichtung zur Konvertierung von Eingaben aus Textnachrichtenformaten in HTML-Formularfelder und zur Darstellung von HTML- Formularfeldern in Textnachrichtenformaten anhand profilierter Vorgaben.

Mobiltelefone und andere mobile Telekommunikationsendgeräte werden heutzutage von einer Vielzahl von Benutzern zur Kommunikation, aber auch zur anderweitigen Datenübertragung genutzt. Die textliche Kommunikation mit mobilen Endgeräten erfolgt dabei in weit überwiegendem Maße durch den Austausch von sogenannten Kurznachrichten unter den Mobildfunknutzern durch einen Kurznachrichtendienst (SMS - Short Message Service) der Mobilfunkbetreiber.

Weiterhin stehen dem Nutzer heutzutage eine Vielzahl von Informationen und Applikationen im Internet (WWW) zur Verfügung. Diese Internet-basierten Applikationen können über einen mit dem Internet verbundenen Computer mit Hilfe eines sogenannten Internet-Browsers abgefragt und bedient werden, wobei in weit überwiegendem Ausmaß die Informationen und Applikationen im Internet in einem auf den SGML-Standard basierenden Format (z. B. HTML, XML) zur Verfügung stehen, wobei es üblich ist, Benutzereingaben und Darstellungen von Daten in HTML-Formularen unter Verwendung der <FORM> und <INPUT> -Tags darzustellen bzw. abzufragen. Die abgefragten Informationen werden dabei in identifizierbaren Abschnitten des HTML-Dokuments gehalten, wie z. B. in sog. <INPUT> -Tags, und es werden weiterhin sog. Attribute zum Identifizieren der Inhalte (z. B. ID = oder NAME = Attribut) und für den eigentlichen Inhalt (z. B. VALUE = Attribut) gemäß dem SGML-Standard bereitgestellt. Die abgefragten Datenfelder werden dann mit Bezeichner und Wert an den im <FORM-Action> - Attribut angegebenen URL gesendet. Die zur Steuerung der Abfrage erforderlichen Vorgänge entsprechen dabei dem REQUEST-/RESPONSE-Verfahren, das der Angabe der Attribute ACTION = {URL} und METHOD = {GET/POST} in einem <FORM> Element in der Internetseite entspricht.

Diese Abfrage von Informationen und Applikationen im Internet kann daher im Regelfall von jedem Gerät mit HTML-Browser und Internet-Anschluß genutzt werden. Da die textliche Kommunikation mit mobilen Telekommunikationsendgeräten heutzutage in weit überwiegendem Maße mittels SMS erfolgt, hat es sich als nachteilig erwiesen, daß die auf Webseiten im Internet in einem auf dem SGML-Standard basierten Format zur Verfügung stehenden Informationen und Applikationen nicht von rein zur textlichen Kommunikation fähigen Geräten, wie z. B. Mobiltelefonen mit SMS-Funktionalität, abgefragt werden können.

Lediglich der reine Austausch von Daten ist über sog. SMS-zu-HTTP-Brücken (gateways) zwischen dem Mobilfunknetz und dem Internet möglich. Weiterhin ist eine Interpretation des HTML-Formats auf dafür eingerichteten Mobiltelefonen dann möglich, wenn das Mobiltelefon mit einem speziellen Browser (z. B. nach dem WAP-Standard) versehen ist und der Anbieter der HTML-Seite sich gezielt auf diese Nutzung durch Bereitstellung WAP-konformer Seiten eingerichtet hat. Die Praxis hat jedoch gezeigt, daß sich nur wenige Anbieter von Webseiten auf diese Nutzung einrichten und daß aufgrund der oft geringen für das Mobiltelefon zur Verfügung stehenden Bandbreite nur eine sehr geringe Arbeitsgeschwindigkeit beim Browsen per Mobiltelefon erreicht wird und die Bedienung des WAP-konformen Browsers am Mobiltelefon langwierig und langsam und damit wenig praktikabel ist. Außerdem reicht das begrenzte Display des Mobiltelefons oft nicht aus, um bildliche Darstellungen überhaupt oder in ausreichender Auflösung darzustellen.

Aufgabe der Erfindung ist es daher, ein Verfahren und eine Vorrichtung zum automatischen Verarbeiten textbasierter Nachrichten zur Abfrage von Internet-basierten Applikationen oder Inhalten bereitzustellen, mit welchen eine Abfrage nahezu beliebiger Webseiten im Internet mit einer Textnachricht möglich ist.

Diese Aufgabe wird durch ein Verfahren und eine Vorrichtung gemäß der unabhängigen Patentansprüche gelöst. Die abhängigen Patentansprüche definieren dabei vorteilhafte und bevorzugte Ausführungsformen der vorliegenden Erfindung.

Durch die Erfindung wird es insbesondere ermöglicht, die Nutzung eines zum Senden und/oder Empfangen von Textnachrichten fähigen Kommunikationsendgerätes auf die Abfrage von Informationen, Inhalten und Applikationen im Internet auszudehnen, was wegen der erheblich größeren Reichweite und Flexibilität des mobilen Kommunikationsgerätes wünschenswert ist. Die erfindungsgemäße Abfrage von Internet-basierten Applikationen oder Inhalten mit Hilfe von entsprechenden Abfragen, machen Webseiten dem Datenaustausch mit Hilfe textbasierter Nachrichten über ein Telekommunikationsendgerät auch dann zugänglich, wenn der Anbieter der Webseite die Nutzung seiner Seite nur von üblichen PCs und damit mit einem entsprechenden Internet-(HTML-)-Browser vorgesehen hat. Somit lassen sich z. B. Buchungsaufträge durchführen und Informationen abfragen, indem mit Hilfe einer von einem mobilen Telekommunikationsendgerät gesendeten Textnachricht eine Webseite gemäß dem bereitgestellten Verfahren abgefragt wird.

Es wird dabei erreicht, einen Dialog mit HTML-Seiten über das Internet auch von einem mobilen Telekommunikationsendgerät zu initiieren und zu führen, das nur über die Fähigkeit verfügt, Textnachrichten zu senden und zu empfangen.

Zur Realisierung des Verfahrens werden die von Mobilfunkbetreibern bereitgestellten SMS-zu-HTTP-Gateways sowie die HTTP-zu-SMS-Gateways benötigt. Diese Gateways (zu Deutsch "Brücken") sorgen dafür, daß eine Textnachricht in einen Datenstrom umgewandelt wird, der über das Internet an einen Computer, der mit dem Internet verbunden ist, gesendet werden kann. Die Zuordnung der Rufnummer des Telekommunikationsendgerätes des Nutzers, an der der Nutzer eine Textnachricht empfangen kann, zu einer IP-Adresse eines Computers im Internet, sowie die umgekehrte Zuordnung einer Telefonnummer, an die eine Abfrage einer Webseite zu senden ist zu einer entsprechenden IP-Adresse eines Rechners im Internet wird beim Betreiber der Gateways vorgenommen. Ebenso stellen die Mobilfunkbetreiber die Rechner im Internet zur Verfügung, über die man einen Text an einen Mobilfunkempfänger senden kann.

Wegen der geringen Datenmenge bei SMS (im GSM-System 160 Zeichen) wird zur Übertragung des Inhalts der textbasierten Nachricht nur eine erheblich kürzere Zeit benötigt, als es z. B. bei einem Mobiltelefon mit einem WAP-konformen Browser der Fall wäre, wenn überhaupt der Anbieter der Webseite diese für die Abfrage mit einem WAP-konformen Browser eingerichtet hat.

Die vorgeschlagene Lösung verbindet zwei bisher weitgehend voneinander unabhängige Kommunikationsnetze: Internet und Mobilfunknetz, z.B. GSM, und schafft für Webseiten im Internet eine zusätzliche Nutzungsmöglichkeit, indem Informationen mit Hilfe von Kurznachrichten vom Mobiltelefon mit seiner deutlich größeren und flexiblen Reichweite aus abgefragt werden können. Durch die Konvertierung einer von der Webseite auf die Abfrage hin gesendeten Antwort in eine textbasierte Nachricht, kann auch das Ergebnis der Abfrage wiederum als Textnachricht im Display des mobilen Telekommunikationsendgerätes angezeigt werden.

Die Erfindung stellt dabei ein Verfahren zur Verfügung, das in einem Computerprogramm implementierbar ist. Das Computerprogramm wird dabei auf einem Computer ausgeführt, der mit dem Internet verbunden ist und über das Internet einerseits einen Verbindungsaufbau zum Gateway und andererseits zu den gewünschten Webseiten ermöglicht. Wenn nun eine textbasierte Nachricht beim Computer bzw. der erfindungsgemäßen Vorrichtung eintrifft, beginnt das Programm den Inhalt der Nachricht zu interpretieren und extrahiert die relevanten Informationen. Dabei wird zunächst ein Schlüsselwort extrahiert, anhand dessen das Programm die Webseite erkennt, zu der der Nutzer eine Verbindung aufbauen möchte, um eine Internet-basierten Applikation abzufragen.

Nachfolgend wird die vorliegende Erfindung anhand mehrerer Ausführungsbeispiele unter Bezugnahme auf die beiliegenden Zeichnungen im Detail beschrieben.

Es zeigen:
- Fig. 1: eine erste Konfiguration gemäß einem Ausführungsbeispiel der Erfindung;
- Fig. 2: einen Ablaufplan gemäß einem ersten Ausführungsbeispiel der Erfindung;
- Fig. 3: den prinzipiellen Ablauf einer Abfrage gemäß einem Ausführungsbeispiel der Erfindung;
- Fig. 4a: Nachrichten, Abfragen, Antworten, Tabellen etc. in verschiedenen Datenformaten die in einer Abfrage gemäß Fig. 3 anfallen;
- Fig. 4b: weitere Nachrichten, Abfragen, Antworten, Tabellen etc. in verschiedenen Datenformaten die in einer Abfrage gemäß Fig. 3 anfallen;
- Fig. 4c: die ausschnittsweise Darstellung eines Abfrageergebnisses einer Abfrage gemäß Fig. 3 in einem HTML-Browser;
- Figs. 5a,b: den prinzipiellen Ablauf einer erweiterten Abfrage gemäß einem weiteren Ausführungsbeispiel der Erfindung;
- Fig. 6: den prinzipiellen Ablauf einer Kommunikation mit einem Internet-Dienst gemäß einem weiteren Ausführungsbeispiel der Erfindung.

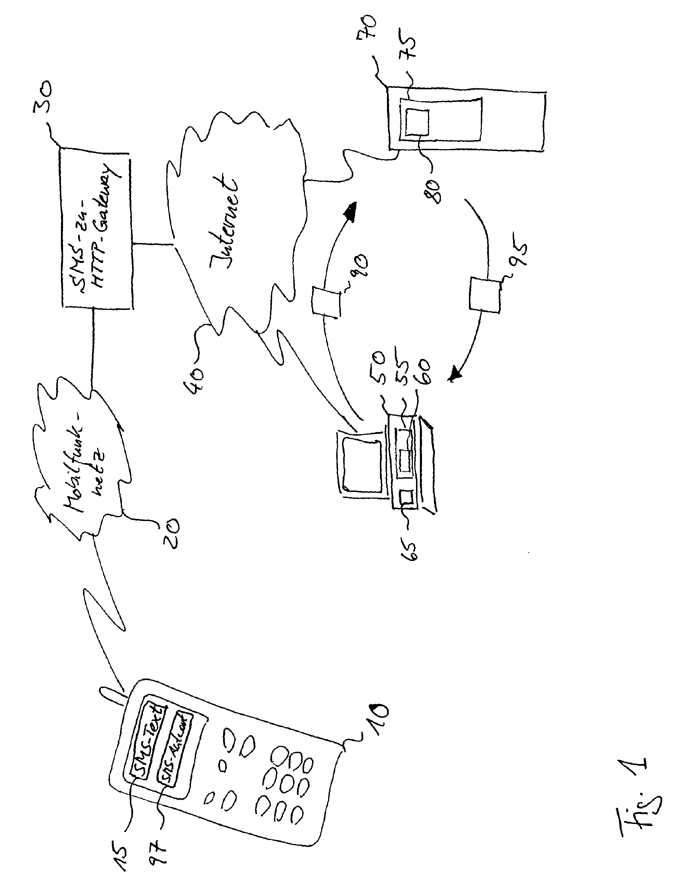

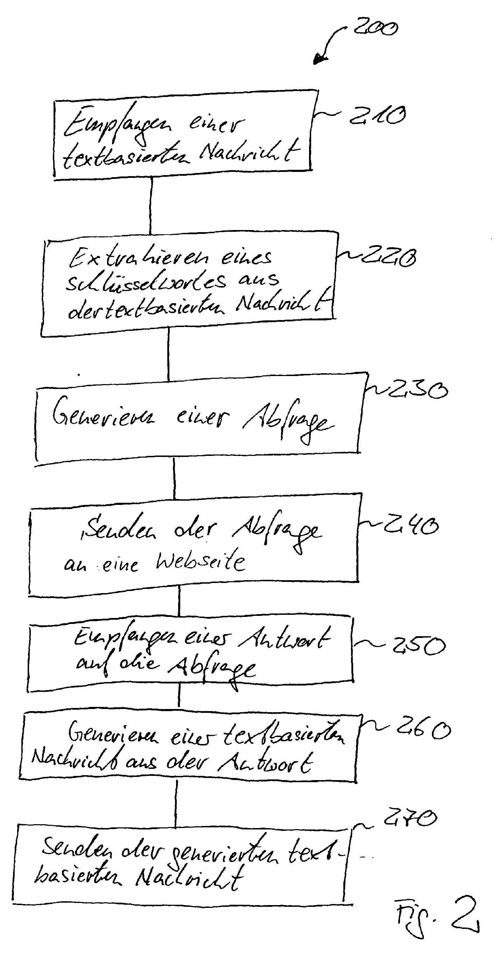

Fig. 1 zeigt eine Konfiguration, mit deren Hilfe die Erfindung gemäß einem ersten Ausführungsbeispiel erläutert wird. Ein mobilen Telekommunikationsendgerät, wie z. B. ein Mobiltelefon 10 ist dabei in einem Mobilfunknetz, z. B. das GSM-Netz, 20 angemeldet, über das es eine textbasierte Nachricht, z. B. eine SMS, 15, zur Abfrage einer Internet-basierten Applikation 80, die im Speicher 75 eines Web-Servers 70 gespeichert ist. Die Textnachricht 15 wird vom SMS-zu-HTTP-Gateway 30 entsprechend konvertiert, um dann über das Internet 40 an einen Rechner bzw. Computer 50, auf dem ein Computerprogramm 60 zum automatischen Verarbeiten der Textnachricht 15 im Speicher 55 gespeichert ist.

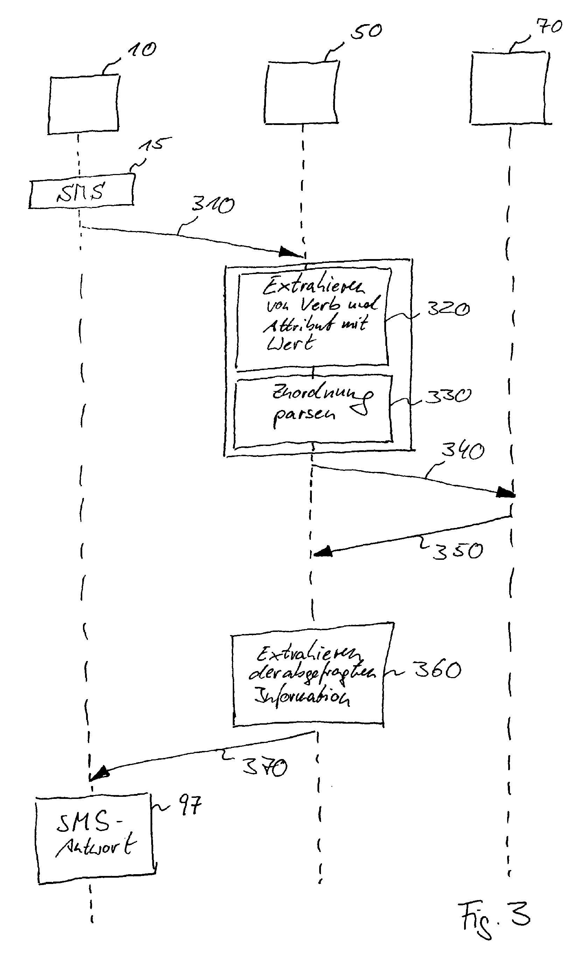

Der Ablauf eines Verfahrens gemäß einem ersten Ausführungsbeispiel der Erfindung in einer Konfiguration gemäß Fig. 1 soll nun anhand von Fig. 2, die ein Ablaufdiagramm 200 zeigt, erläutert werden. Die vom Mobiltelefon 10 gesendete Nachricht 15 wird vom Computer 50 empfangen (Schritt 210). Ist die Nachricht 15 im Computer 50 eingetroffen, beginnt das Programm 60, den Inhalt der Nachricht zu interpretieren und extrahiert die relevanten Informationen, wobei zumindest ein Schlüsselwort aus der Nachricht extrahiert wird (Schritt 220). Über seine Einstellung, die beispielsweise in zumindest einer Tabelle 65 auf dem Computer 50 hinterlegt sind, wie die Abfrage entsprechend dem Schlüsselwort in Schritt 230 generiert wird. Anhand des Schlüsselwortes und den entsprechenden Einstellungen in Tabelle 65 ergibt sich eindeutig, wie die Abfrage 90 aufzubauen ist. Das Schlüsselwort ist dabei beispielsweise der URL, also die Adresse, der abzufragenden Internet-basierten Applikation, z. B. eine Webseite im Internet, oder über das Schlüsselwort aus dem Datenstrom der Nachricht 15 läßt sich über eine Parserfunktion des Programmes 60 ein in der Tabelle 65 hinterlegter URL extrahieren. Die gemäß dem Schlüsselwort und/oder voreingestellter Informationen, die z. B. in der Tabelle 65 hinterlegt sind, wird die Abfrage 90 an den identifizierten URL im Internet geschickt (Schritt 240). Damit ist erreicht, daß mit Hilfe einer Textnachricht 15 eine Webseite im Internet von einem Mobiltelefon 10 abrufbar ist.

Da der Nutzer jedoch regelmäßig wissen möchte, ob seine Abfrage auch erfolgreich durchgeführt wurde oder er mit seiner Abfrage eine bestimmte Information von der Webseite 80 abrufen möchte, wird gemäß einem weiteren Ausführungsbeispiel der Erfindung eine von der Webseite 80 auf die Anfrage hin erzeugte Antwort 95 vom Computer 50 in Schritt 250 empfangen. Aus dem empfangenen Datenstrom der Webseite, z. B. HTML-Code, extrahiert das Programm 60 mit Hilfe einer weiteren Parserfunktionalität Ergebnisinformationen, die als Antwort auf die Abfrage 90 von der Webseite erzeugt wurden (Schritt 260). Was dabei als Ergebnisinformationen angesehen wird, ist gemäß einem Ausführungsbeispiel wiederum beispielsweise in Tabelle 65 anhand von Schlüsselwörtern hinterlegt. In Schritt 260 wird weiterhin aus den empfangenen Ergebnisinformationen eine Textnachricht 97 generiert, die vom Computer 50 über das Internet 40, das SMS-zu-HTTP-Gateway 30 und das Mobilfunknetz 20 an das Mobiltelefon 10 des Nutzers gesendet wird (Schritt 270).

Gemäß einem Ausführungsbeispiel der Erfindung verwendet das Programm 60 zur Kommunikation mit der Webseite 80 Abfrage- und Antwortformate gemäß dem SGML-Standard, z. B. HTTP-Request und HTTP-Response.

Da für das initiieren von HTML-Sitzungen aus Textnachrichten heraus keine definierten Abfrageformate existieren und für den Aufbau von Kurznachrichten ebenfalls keine Standardisierung existiert, ist im Programm 60 zur Ausführung des Abfragedialogs zwischen Computer 50 und Webseite 80 die Ausführung des Abfragedialogs hinterlegt und die Interpretation des Datenstroms der Textnachricht definiert. Zur Ausführung des Abfragedialogs wird beispielsweise ein im Programm 60 oder in der Tabelle 65 hinterlegtes Ablaufscript verwendet. Die gemäß der Parserfunktion aus dem Datenstrom extrahierten Inhalte werden gemäß den in der Tabelle 65 hinterlegten Vorgaben zugeordnet. Die Tabelle 65 enthält dabei beispielsweise eine Tabelle mit SGML-Tag Bezeichnern, die bei der Abfrage verwendet werden sollen, zumindest eine Zuordnungstabelle von Attributen pro SGML-Tag Bezeichner, zumindest eine Zuordnungstabelle von Text-Verben zu URLs sowie gegebenenfalls Formatanweisung und/oder Vorlagen für die Textausgabe. Das Programm unterscheidet bei den Inhalten zwischen sogenannten Verben (= Kommando) und Attributen, denen bestimmte Werte zuordbar sind. Anhand der Zuodnungstabellen erfolgt die Generierung der HTML-Abfrage (per HTTP-Request) zur Ausführung des Sende- und Empfangsvorgangs über das Internet. Dabei ist in dem Programm 60 hinterlegt, welcher Sendevorgang mit dem empfangenen Verb begonnen werden soll. Da der Benutzer eine bestimmte, ihm bekannte Webseite im Internet ansteuert, kennt er auch die Attribute, die nötig sind, um seine Abfrage zu bearbeiten. Daher wird der Benutzer diese Attribute mit den gewünschten Werten ebenfalls im Text angeben. Durch die Zuordnung von Werten zu Attributen in der Syntax der Textnachricht ist es beispielsweise möglich, die Attribute/Wertepaare in beliebiger Reihenfolge innerhalb der Textnachricht anzugeben. Mit den im Ablaufscript hinterlegten Arbeitsschritten zu dem extrahierten Verb ist das Programm in der Lage, die Abfrage zu generieren und den Dialog mit der gewünschten Webseite zu führen.

Gemäß einem Ausführungsbeispiel, bei dem am Ende des Dialoges mit der Webseite eine Ergebnisinformation an den Nutzer zurückgegeben werden soll, wird diese Ergebnisinformation durch die im Ablaufscript hinterlegten Arbeitsschritte in eine Textnachricht eingebunden und an das Mobiltelefon 10 als SMS 97 übermittelt. Damit ist gemäß den Zuordnungstabellen in der Tabelle 65 zu jedem relevanten Eingabe- bzw. Datenfeld für den Dialog zu den gewünschten Webseiten 80 hinterlegt, anhand welches eindeutigen Begriffs das Datenfeld identifiziert wird und wie es jeweils zu übersetzen ist. Aus den Informationen aus dem Datenstrom der Textnachricht, gegebenenfalls ergänzt durch Informationen, die der Nutzer für einzelne Eingabe- bzw. Datenfelder zuvor in einem Benutzerprofil hinterlegt bzw. konfiguriert hat, füllt das Programm die durch <INPUT> -Tag gekennzeichneten Felder auf und bildet somit die Parameterliste, die für das Senden des in dem <FORM-Action> -Attribut der HTML-Seite 80 angegebenen HTTP-Requests erforderlich ist. Damit ist das Programm 60 fähig, anhand der Informationen aus dem Datenstrom der Textnachricht 15 den Eingabe- und Datenfeldern der gemäß dem Ablaufscript zu generierenden HTML-Abfrage entsprechende Werte zuzuordnen. Mit Hilfe der den Feldern zugeordneten Werte werden die entsprechenden <INPUT> -Tags gebildet und der HTTP-Request zur Auslösung der Abfrage durch Angabe des Attributs ACTION = {URL und/oder CONTENT} erstellt.

Gemäß einer Ausführungsform der Erfindung ist das Benutzerprofil ebenfalls in Form einer Tabelle in der Tabelle 65 hinterlegt.

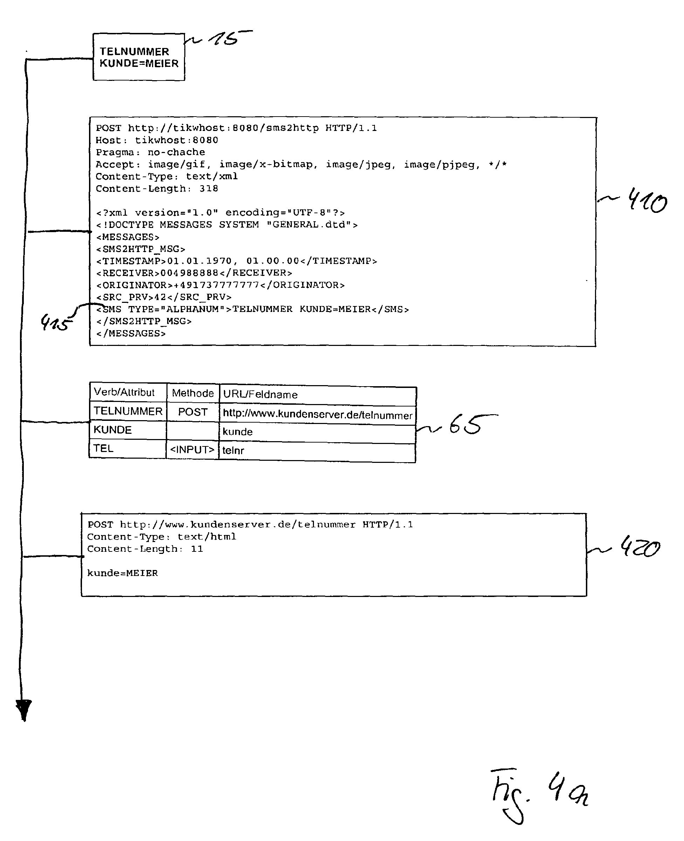

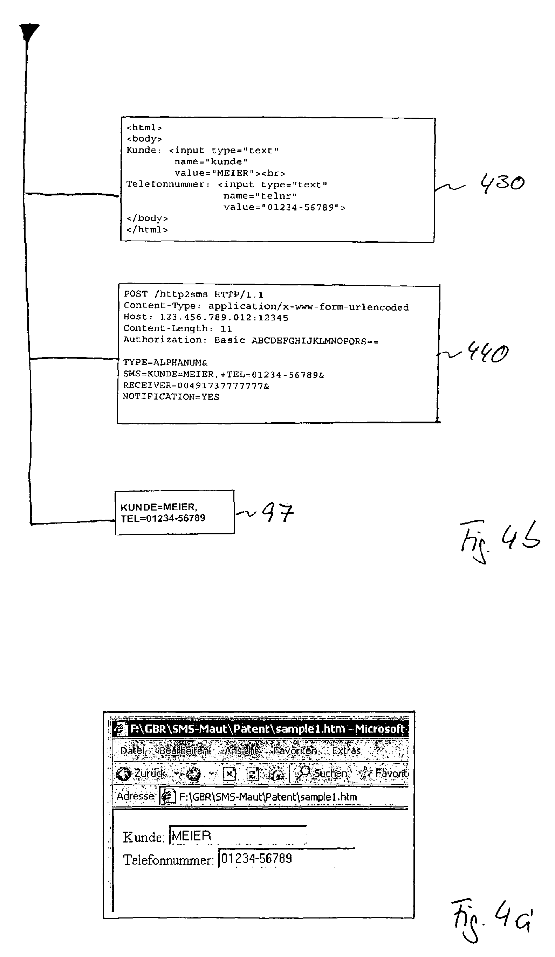

Anhand der Figuren 3, 4a, 4b und 4c soll nun ein Ausführungsbeispiel der Erfindung erläutert werden, das ein Verfahren betrifft, bei dem mit einer Textnachricht eine Webseite zum Bereitstellen einer Telefonnummer eines Teilnehmers abgefragt wird und als Ergebnis der Abfrage die Telefonnummer des Teilnehmers als Textnachricht auf dem Mobiltelefon des Nutzers angezeigt wird. Die dazu notwendige Textnachricht 15 besteht aus dem Datenstrom "TELNUMMER KUNDE = MEIER" (Fig. 4a), wobei "TELNUMMER" das Verb darstellt und "KUNDE" das Attribut mit dem Wert "MEIER" ist. Der Nutzer gibt diese SMS in sein Mobiltelefon 10 ein und sendet diese Nachricht über das SMS-zu-HTTP-Gateway zum Computer 50 (Operation 310). Die vom Computer 50 empfangene durch das Gateway konvertierte Nachricht liegt sodann im HTTP-Format 410 vor. In Schritt 320 wird nun der Feldinhalt des Feldes <SMS> vom Programm 60 ausgewertet, wobei das Verb "TELNUMMER" und das Attribut "KUNDE" mit dem Wert "MEIER" extrahiert wird. Gemäß der Konfigurationstabelle 65 (Fig. 4a) werden die Zuordnungen geparst und dem Wert der angegebene URL und dem Feld "kunde" der dem entsprechenden Attribut "KUNDE" übermittelte Wert "Meier" zugeordnet (Schritt 330). Vom Computer 50 wird nun anhand der zugeordneten Angaben und ggf. weiterer Konfigurationsangaben in der Tabelle 65 ein HTTP-Request 420 als Anfrage an die Webseite 80 generiert und vom Computer 50 über das Internet 40 an den die Webseite 80 hostende Webserver 70 gesendet (Operation 340).

Als Antwort auf den HTTP-Request 420 erhält der Computer 50 vom Webserver 70 den abgefragten Inhalt von der Webseite 80 als Antwort 95 in Form der HTTP-Response 430 zurück. Würde man diese HTTP-Response 430 durch einen Internet-Browser interpretieren und anzeigen lassen, würde beispielsweise der in Fig. 4c dargestellte Ausschnitt als Ergebnis der Abfrage zur Anzeige gebracht werden.

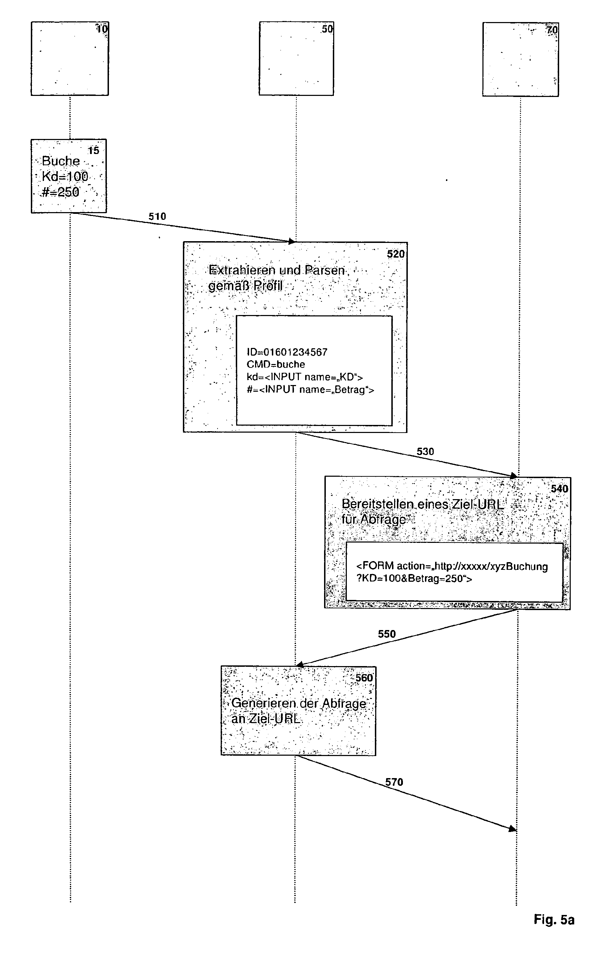

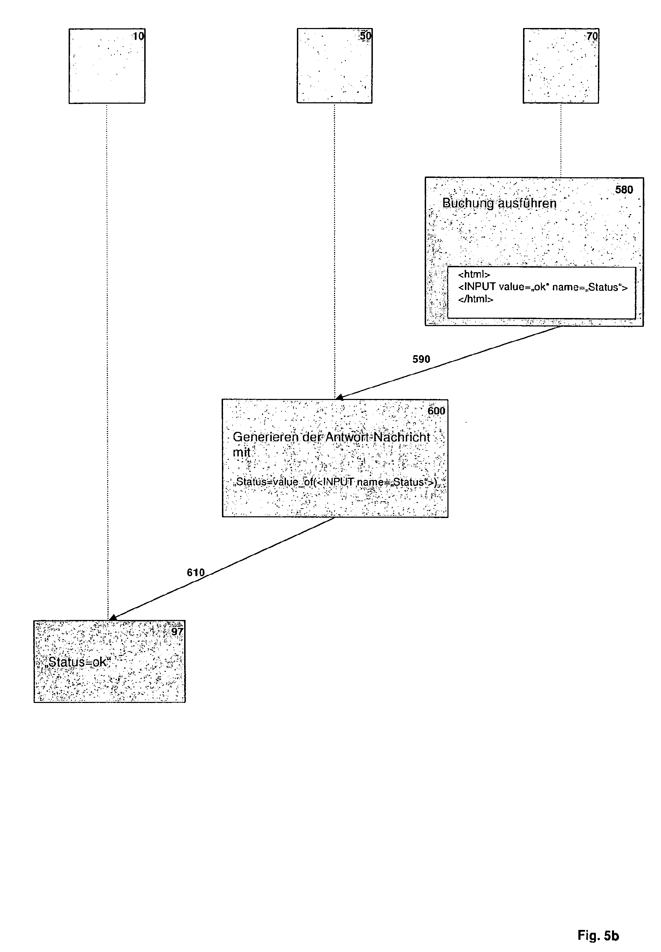

Gemäß dem hier geschilderten Ausführungsbeispiel wird der HTTP-Response 430 so weiterverarbeitet, daß in Operation 360 die abgefragte Information, nämlich die Telefonnummer "01234-56789" des Kunden Meier extrahiert wird. Mit dieser extrahierten Information wird eine entsprechende Textnachrichtantwort 440 generiert, die dann in Operation 370 vom Computer 50 über das Gateway 30 und das Mobilfunknetz 20 als SMS-Antwort 97 mit dem Datenstrom "KUNDE = MEIER, TEL = 01234-56789" (Fig. 4b) gesendet wird. Damit erhält der Nutzer auf seine gesendete SMS 15 mit der SMS-Antwort 97 den gewünschten Dateninhalt, der von der Webseite 80 im Internet abgefragt wurde.
Ein weiteres Ausführungsbeispiel wird nun mit Bezug auf die Figuren 5a und 5b beschrieben. In dieser Ausführungsform wird das erfindungsgemäße Verfahren für die Buchung von Maut-Tickets in einem Internet-basierten Mautsystem, zum Beispiel für die Buchung von LKW-Maut-Tickets im Internet-Buchungssystem zur Bezahlung der LKW-Maut auf deutschen Autobahnen, durch Versenden einer Nachricht im SMS-Format über ein mobiles Telekommunikationsendgerät, wie z.B. ein Mobiltelefon. Durch die große Verbreitung sowie die große Reichweite, Mobilität und Erreichbarkeit von Mobiltelefonen, die regelmäßig über SMS-Funktionalität verfügen, bieten sich diese als einfache Eingabegeräte für die Buchung der Mautgebühren per SMS an. Damit wird durch das erfindungsgemäße Verfahren eine besonders einfache, schnelle und kostengünstige Buchung der Mautgebühren ermöglicht. Dadurch erübrigt sich für die Spediteure der Einbau von automatischen Buchungsgeräten ("On-Board-Units") sowie die manuelle Anmeldung an den dafür bereit gestellten Mautstellen-Terminals an z.B. Tankstellen und Autohöfen, wodurch Geld- bzw. Zeiteinsparungen realisiert werden können. Zur Ermöglichung des Einbuchens der LKW-Maut per SMS richtet der Nutzer zunächst einmalig für sich ein Profil mit den für die Internet-basierte Mautbuchungs-Applikation relevanten Informationen ein. Diese relevanten Informationen sind beispielsweise die Kundennummer des Nutzers bei dem Mautsystem-Betreiber, z.B. Toll Collect, diese kann z.B. der Mobiltelefonnummer des Nutzers entsprechen, sowie das dortige Benutzerkennwort, Fahrzeug- und Routeninformation. Das für den Nutzer mit diesen Informationen eingerichtete Profil wird beispielsweise im Internet auf dem Computer 50 oder einem Internet-Server unter einem eindeutigen Schlüsselwort, das z.B. die Mobiltelefonnummer des Nutzers sein kann, gespeichert. Die Einrichtung dieses Profils kann dabei entweder durch einen eigenständigen Internet-Dialog, durch Eingabe über ein Call-Center, durch das Senden von weiteren Nachrichten mit den Konfigurations-Informationen an die Web-Site des Mautbuchungs-Systems, durch Einspielen einer entsprechenden Konfigurationsdatei oder durch andere geeignete Wege erfolgen. Im Ergebnis wird für den Nutzer ein Profil angelegt, das in den Tabellen 65 abgelegt wird und über das Schlüsselwort abrufbar ist.

Um nun eine Buchung auf der Mautbuchungsseite im Internet auszuführen, sendet der Nutzer über sein Mobiltelefon eine textbasierte Nachricht, die zumindest das Schlüsselwort enthält, an den Computer 50. Das auf dem Computer 50 laufende Programm 60 erkennt den Nutzer anhand seiner Mobiltelefonnummer und/oder dem Schlüsselwort und baut darauf hin unter Nutzung der zugeordneten Profildaten einen Link zu dem für das Schlüsselwort hinterlegten URL auf, der der Adresse der Mautbuchungsseite im Internet entspricht. Mit einer über den Link gesendeten Abfrage (per http-request) erhält das Programm 60 ein HTML-Formular zur Eingabe der Buchungsdaten zurück (per http-response). Die im HTML-Code des HTML-Formulars eingebetteten <FORM> - und <INPUT>-Text werden identifiziert und mit den im Nutzerprofil hinterlegten, den Attributen entsprechenden Werten aufgefüllt. Die so aufgefüllten Tags enthalten nun die vom Nutzer gewünschten Buchungsdaten, die nun zusammen in einer weiteren Abfrage an die ebenfalls im empfangenen HTML-Formular enthaltenen, im <FORM-action>-Attribut hinterlegten URL gesendet. Auf der Mautbuchungsseite löst die mit den entsprechenden Werten aufgefüllte Abfrage die Maut-Ticket-Buchung aus. Das Maut-Ticket-System antwortet sodann mit eine Antwort an den Computer 50, die beispielsweise eine Ticket-ID-Nummer für die Buchung enthält. Diese Ticket-ID-Nummer wird wiederum vom Programm 60 extrahiert und dem Nutzer im SMS-Nachrichten-Textformat übermittelt. Gemäß einem speziellen Ausführungsbeispiel der vorliegenden Erfindung verwendet das Programm 60 dabei eine zum Beispiel im Speicher 55 hinterlegte Vorlage zur Gestaltung und/oder Aufbereitung der textbasierten Nachricht. Diese Rück-Nachricht wird unter Verwendung des http-zu-SMS-Gateways als SMS-Antwort auf das Mobiltelefon 10 des Nutzers gesendet, wodurch die Anforderung des Maut-Tickets und damit die Abfrage abgeschlossen ist.

Mit anderen Worten, nach einer einmaligen Registrierung des Nutzers, zum Beispiel eines LKW-Fahrers auf der Internet-Seite des Mautbuchungssystems, kann jeder Nutzer durch das Abschicken einer textbasierten Nachricht über sein Mobiltelefon alle erforderlichen Daten seiner Tour (Strecke, Zeit, Fahrzeugtyp etc.) in das Mautbuchungssystem einbuchen. Als Bestätigung erhält der Fahrer ebenfalls per textbasierter Nachricht eine Bestätigungsnummer vom Buchungssystem über das Internet, so dass die mautpflichtige Strecke vom Nutzer sodann gefahren werden kann. Der Weg zum Mautstellen-Terminal oder ein Anruf des Nutzers bei seiner Spedition entfällt bei diesem Verfahren, so dass Nutzer, die ebenfalls auf den Einbau von "On-Board-Units" verzichten, Zeit und Kostenvorteile realisieren können.

Das Buchungsverfahren wird nun anhand der Figuren 5a und 5b beschrieben. Der Nutzer sendet vom Mobiltelefon 10 per SMS eine Nachricht "Buche kd = 100 # = 250" als Buchungsabfrage an den Computer 50 (Schritt 510). In Schritt 520 extrahiert und parst das Programm 60 gemäß dem Nutzerprofil die in der Nachricht enthaltenen Informationen (Mobiltelefonnummer des Nutzers als ID, "Buche" als Schlüsselwort bzw. Verb, den Wert "100" für das Attribut "kd" und den Wert "250" für das Attribut "#"). Mit einer ersten Abfrage 530 vom Computer 50 an die Buchungswebseite 80 wird von dieser ein Ziel-URL für die weitere Abfrage bereitgestellt. Dieser Ziel-URL erhält der Computer 50 als Antwort in Form des HTML-Formulars zurück (Schritt 550), wobei der Ziel-URL im <FORM-Action>-Tag hinterlegt ist. In Schritt 560 wird nun eine zweite Abfrage generiert, die sowohl die mit den Buchungsdaten aufgefüllten Tags hinterlegt und sodann an den Ziel-URL gesendet (Schritt 570). Der Ziel-URL stellt dabei beispielsweise eine für die Buchung bereitgestellte Adresse im Sinne einer Session-ID dar, um zum Beispiel zu gewährleisten, daß der unter einem bestimmten Schlüsselwort temporär aufgebaute Link vom Buchungssystem durch Antworten mit einem entsprechenden HTML-Formular auch nur für diese Buchung verwendet wird. Empfängt das Buchungssystem an dem Ziel-URL die zweite Abfrage mit den Buchungsdaten, wird die Buchung entsprechend der Buchungsdaten ausgeführt (Operation 580). Nach erfolgter Buchung sendet das Buchungssystem als Buchungsbestätigung eine zweite Antwort an den Computer 50 (Schritt 590). In Schritt 600 wird dann durch Extrahieren der Statusinformation aus der zweiten Antwort eine Antwortnachricht generiert und als Textnachricht über das Gateway an das Mobiltelefon 10 gesendet (Schritt 610). Die Textnachricht "status = okay" wird sodann per SMS auf dem Mobiltelefon empfangen. Damit ist der Buchungsvorgang erfolgreich abgeschlossen.

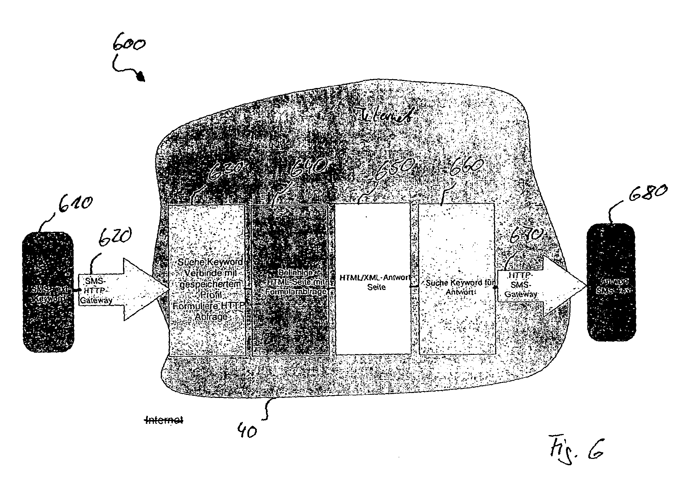

Ein weiteres Ausführungsbeispiel wird im folgenden mit Bezug auf Fig. 6 beschrieben. Das Ablaufdiagramm 600 verdeutlicht den Ablauf eines automatisierten Kommunikationsverfahrens mit einem im Internet 40 abrufbaren Internet-Dienst, wobei die Kommunikation durch eine SMS initiiert und beantwortet wird. Mit Hilfe des Verfahrens ist es daher möglich, durch eine von einem Mobiltelefon (in Fig. 6 nicht dargestellt) versendete SMS mit dem Internet-Dienst zu kommunizieren und eine vom Internet-Dienst erzeugte Antwort als SMS wiederum auf dem Handy zu empfangen.

Der Nutzer sendet per SMS ein SMS-Text-Keyword 610 an eine den Internet-Dienst adressierende Nummer, wie zum Beispiel eine Telefonnummer. Das SMS-Text-Keyword wid dann anhand der Nummer von einem SMS-HTTP-Gateway 620 ins Internet übertragen. Das SMS-Text-Keyword wird sodann von einem Modul 630 weiterverarbeitet, indem ein zu dem Keyword gespeichertes Nutzerprofil abgerufen und eine HTTP-Abfrage für den Internet-Dienst generiert wird. Gemäß einer Ausführungsform wird dabei zunächst das Keyword in einer Liste von gespeicherten Keywords gesucht, das entsprechende Nutzerprofil geladen und mit dem Keyword verbunden und gegebenenfalls mit Hilfe weiterer, in dem SMS-Text-Keyword enthaltenen Informationen eine vordefnierte HTTP-Abfrage formuliert. Diese HTTP-Abfrage wird dann an den Intemet-Dienst gesendet. Bei dem Internet-Dienst handelt es sich typischerweise um eine beliebige HTML-Seite 640 mit Formularabfrage. Als Antwort auf die an die HTML-Seite 640 geschichte HTTP-Abfrage generiert der Internet-Dienst eine entsprechende Antwort 650. Diese Antwort ist typischweise eine HTML- oder XML-Antwortseite. Diese Antwortseite wird nun von einem Modul 660 weiterverarbeitet, indem in der Antwort-Seite nach vordefinierten Keywords (Schlüsselwörtern) z.B. in entsprechenden Textfeldern gesucht wird. Die aufgefundenen und extrahierten Keywords werden sodann von einem HTTP-SMS-Gateway 670 an das Mobiltelefon gesendet und dort als Antwort-SMS-Text 680 empfangen und für den Nutzer angezeigt.

Das vorgeschlagene Verfahren verwendet dabei ein entsprechendes SMS-HTTP-Gateway zum Übertragen der SMS bzw. der darin enthaltenen Keywords vom Mobilfunknetz ins Internet und umgekehrt, wobei die Keywords nicht direkt an einen Internet-Dienst weitergeleitet werden, sondern vielmehr zunächst von einem dazu eingerichteten, als Module 630 und 660 dargestellten, weiteren Internet-Dienst mit bereits gespeicherten Nutzerprofilen oder anderen Daten verknüpft werden. Die Module 630 und 660 sind dabei gemäß einer Ausführungsform der Erfindung als ein über das Internet abrufbares Programm, z.B. das vorbeschriebene Computerprogramm 60, auf einem entsprechenden Server gespeichert. Erst mit Hilfe dieser verknüpften und zu HTTP-Abfragen weiterverarbeiteten Daten erfolgt eine Abfrage des eigentlichen Internet-Dienstes. Damit ermöglicht das vorliegende Verfahren eine einfache und effiziente Bedienung beliebiger formularbasierender Internetapplikationen, ohne dass hierfür spezielle Geräte, wie z.B. an den eigentlichen Internet-Dienst angepaßte Mobiltelefone oder spezielle Übertragungswege bzw. Protokolle, wie z.B. WAP, nötig sind. Das Verfahren löst die Bedienung einer Internet-Applikation (Dienst) auf Formular-Basis unter der Verwendung einfacher textbasierender SMS-Nachrichten aus, ohne dass es sich bei der Bedienung dabei lediglich um ein simples Frage-Antwort-Verfahren mit vordefinierten Fragen und Antworten handelt. Das vorgeschlagene Verfahren eignet sich daher für die Abfrage, Bedienung und Kommunikation jeglicher formularbasierter Internet-Applikationen, ohne dass diese speziell dafür eingerichtet sein müßten.

Weitere vorteilhafte Ausführungsbeispiele ergeben sich durch naheliegende und sinnvolle Kombination der Merkmale der vorgeschilderten Ausführungsbeispiele.

### Erläuterung der verwendeten Abkürzungen und Begriffe

- HTML: Abkürzung für Hypertext Markup Language, eine Anwendungsform von SGML, die Auszeichnungssprache wird für Dokumente im WWW verwendet;
- HTTP: Abkürzung für Hypertext Transfer Protokoll, definiert den Zugriff von Clients, z.B Webbrowser, auf serverseitig gespeicherte Informationen im WWW;
- GSM: digitale Mobilfunkttechnologie mit weiter Verbreitung, u.a. Europa, Asien, Afrika, Amerika mit vielen Leistungsmerkmalen;
- SGML: Abkürzung für Standard Generalizated Markup Language, d.h. etwa Standardisierte generalisierte Auszeichnungssprache; als ISO Standard 8879 für Norm für Informationsverwaltungszwecke übernommmen;
- SMS: Abkürzung für Short Message Service, ein in GSM-Mobilfunknetzen angebotener Service für das Versenden von bis zu 160 Zeichen langen Textnachrichten über Mobiltelefone;
- tag: zu Deutsch "Marke", in Auszeichnungssprachen wie SGML und HTML ein Code zur Kennzeichnung von bestimmten Elementen in einem Dokument, um so Infomrationen im Dokument zu verknüpfen;
- URL: Abkürzung für Uniform Resource Locator, d.h. einheitliche Ressourcenadresse, gibt eine Adresse im Internet an und wird von z.B. Webbrowsern verwendet, um Internetressourcen zu lokalisieren;
- WAP: Abkürzung für Wireless Application Protokoll, XML-basierter Standard für die Bereitstellung von Webinhalten über drahtlose Netzwerke, wie z.B, Mobilfunknetzen, diese Inhalte müssen jedoch eigens für WAP zugeschnitten werden;
- WWW: Abkürzung für World Wide Web, Überbegriff für die Sammlung von Hypertextdokumenten, die auf HTTP-Servern in der ganzen Welt abgelegt sind, die Seiten sind in HTML geschrieben und über eine URL-Adresse identifiziert;
- XML: Abkürzung für eXtensible Markup Language, zu Deutsch "erweiterbare Sprache zur Auszeichnung", eine reduzierte Variante von SGML, als Nachfolgerin von HTML gehandelt, erlaubt individuelle Tags zu erzeugen.

## Patentansprüche

1. Verfahren zum automatischen Verarbeiten textbasierter Nachrichten zur Abfrage von Internet-basierten Applikation, umfassend die Schritte:
- Empfangen (210) einer ersten textbasierten Nachricht (15) von einem Nutzer;
- Extrahieren (220) zumindest eines Schlüsselwortes aus der ersten textbasierten Nachricht;
- Generieren (230) einer ersten Abfrage (90) entsprechend dem Schlüsselwort;
- Senden (240) einer ersten Abfrage an eine dem Schlüsselwort zugeordnete Applikation (80).

2. Verfahren gemäß Anspruch 1, wobei das Verfahren weiterhin umfaßt:
- Empfangen (250) einer ersten Antwort (95) auf die gesendete erste Abfrage von der Applikation;
- Generieren (260) einer zweiten textbasierten Nachricht als Antwort auf die erste textbasierte Nachricht aus der ersten Antwort;
- Senden (270) der zweiten textbasierten Nachricht (97) an den Nutzer.

3. Verfahren gemäß einem der Ansprüche 1 oder 2, wobei die textbasierten Nachrichten SMS-Nachrichten sind, die vom Nutzer über ein mobiles Telekommunikationsendgerät (10) gesendet und empfangen werden.

4. Verfahren nach einem der vorhergehenden Ansprüche, wobei die Abfragen in einem gemäß dem SGML-Standard basierenden Format generiert werden.

5. Verfahren nach einem der vorhergehenden Ansprüche, wobei das Verfahren auf einem Rechner (50) im Internet (40) läuft, die textbasierte Nachricht als SMS-Nachricht über eine SMS-zu-HTTP-Brücke (30) an den Rechner gesendet wird und der Rechner die generierten Abfragen als HTML-Abfragen generiert und über das Internet an die Applikation (80) sendet.

6. Verfahren nach einem der Ansprüche 2 bis 5, wobei die erste Antwort eine HTML-Seite umfaßt und die zweite textbasierte Nchricht eine SMS-Nachricht ist, die über eine HTTP-zu-SMS-Brücke (30) an das mobile Telekommunikationsendgerät des Nutzers gesendet wird.

7. Verfahren nach einem der vorhergehenden Ansprüche, wobei das Schlüsselwort den URL selbst oder einen Hinweis auf den URL der Applikation im Internet enthält.

8. Verfahren nach einem der vorhergehenden Ansprüche, wobei das Schlüsselwort die in der ersten textbasierten Nachricht enthaltene Rufnummer des mobilen Telekommunikationsendgerätes des Nutzers ist.

9. Verfahren nach einem der vorhergehenden Ansprüche, wobei jedem Schlüsselwort jeweils ein Profil zugeordnet ist und basierend auf den Abfrageinformationen des jeweiligen Profils die Abfragen generiert werden.

10. Verfahren nach Anspruch 8, wobei für jedes Schlüsselwort zumindest ein Profil enthaltend ein URL der abzufragenden Applikation im Internet gespeichert ist.

11. Verfahren nach einem der vorhergehenden Ansprüche, wobei das Verfahren weiterhin die Abfrage der Applikation mit einem bestimmten Wert beinhaltet und die Applikation weiterhin umfaßt:
- Erhalten eines zumindest ersten Wertes durch Extrahieren zumindest des ersten Wertes aus der ersten textbasierten Nachricht und/oder durch Abbfrage des dem Schlüsselwort entsprechenden ersten Wertes aus dem jeweiligen Profil;
- Generieren der ersten Abfrage entsprechend dem Schlüsselwort mit einem dem ersten Wert entsprechenden Abfragewert;
- Senden einer ersten Abfrage an eine dem Schlüsselwort zugeordnete Applikation.

12. Verfahren nach Anspruch 11, wobei die erste Antwort einen dem Abfragewert entsprechenden von der Applikation ausgegebenen Antwortwert enthält und die generierte zweite textbasierte Nachricht einen dem Antwortwert entsprechenden Textwert enthält.

13. Verfahren nach einem der Ansprüche 11 und 12, wobei die Abfragen einem dem SGML-Standard basierenden Format entsprechen, der erste Wert zumindest ein Attribut mit einem bestimmten Abfragewert enthält, in den Abfragen jeweils ein INPUT-Tag einem Attribut zugeordnet ist und mit dem Abfragewert des jeweiligen Attributs ergänzt wird.

14. Verfahren nach einem der Ansprüche 2 bis 13, wobei nach dem Empfang der erste Antwort weitere Abfragen generiert und an die Applikation gesendet werden.

15. Verfahren nach Anspruch 14, wobei die weiteren Abfragen Werte des Nutzers aus der ersten textbasierten Nachricht und/oder dem Profil des Nutzers und/oder einen mit der ersten Antwort von der Applikation generierten Indentifikationswert enthalten.

16. Verfahren nach Anspruch 15, wobei der Identifikationswert (Session-ID) die Abfragen gegenüber der Applikation identifiziert und/oder für die Abfrage einen eigenen URL bereit stellt.

17. Verfahren nach einem der vorgehenden Ansprüche, wobei das Verfahren im Internet auf einer Webseite Informationen abfragt und auf dem mobilen Telekommunikationsendgerät des Nutzers anzeigt.

18. Verfahren nach einem der vorgehenden Ansprüche, wobei mit Hilfe des Verfahrens ein Maut-Ticket in einem internetbasierten Mautbuchungssystem per SMS vom Nutzer buchbar ist.

19. Elektronische Datenverarbeitungsvorrichtung zum Ausführen eines Verfahrens gemäß einem der vorgehenden Ansprüche.

20. Elektronische Datenverarbeitungsvorrichtung gemäß Anspruch 19, wobei die Datenverarbeitungsvorrichtung ein Computer mit Zugang zum Internet ist, auf dem ein Programm gespeichert ist, das, wenn es ausgeführt wird, ein Verfahren gemäß einem der vorgehenden Ansprüche ausführt.

21. Computerprogramm enthaltend auf einem Computer ausführbaren Programmcode, der, wenn er auf einem Computer ausgeführt wird, ein Verfahren gemäß den Ansprüchen 1 bis 18 ausführt.

22. Computerprogrammprodukt, auf dem ein Computerprogramm nach Anspruch 21 gespeichert ist.
